# EUROPÄISCHE PATENTSCHRIFT

(11) **EP 3 332 135 B1**
(45) Veröffentlichungstag und Bekanntmachung des Hinweises auf die Patenterteilung: **15.05.2019**
(21) Anmeldenummer: 16763434.4
(22) Anmeldetag: 03.08.2016
(51) Int. Cl.: F16C 43/06, F16C 43/08, F16C 19/36, F16C 33/36, F16C 33/58, F16C 19/22, F16C 33/49, F16C 33/46

(54) **VERFAHREN UND VORRICHTUNG ZUR HERSTELLUNG EINES SCHRÄGROLLENLAGERS**
METHOD AND DEVICE FOR PRODUCING AN ANGULAR CONTACT ROLLER BEARING
PROCÉDÉ ET DISPOSITIF POUR LA FABRICATION D'UN ROULEMENT À ROULEAUX À CONTACT OBLIQUE

(30) Priorität: 04.08.2015 DE 102015214845
(43) Veröffentlichungstag der Anmeldung: 13.06.2018
(73) Patentinhaber: Schaeffler Technologies AG & Co. KG, 91074 Herzogenaurach (DE)
(72) Erfinder: HOFMANN, Heinrich, 97422 Schweinfurt (DE); EIDLOTH, Rainer, 91074 Herzogenaurach (DE); RUMPEL, Reinhard, 97228 Rottendorf (DE); GEIGER, Ernst, 91352 Hallerndorf (DE)
(86) Internationale Anmeldenummer: PCT/DE2016/200354
(87) Internationale Veröffentlichungsnummer: WO 2017/020906

(56) Entgegenhaltungen:
- DE-A1- 2 720 887
- DE-U1- 8 713 057

## Beschreibung

### Gebiet der Erfindung

Die Erfindung betrifft ein Verfahren zur Herstellung eines insbesondere einreihigen Schrägrollenlagers, welches insbesondere vorteilhaft als Festlager zur Lagerung der Hauptwelle in einem Kraftfahrzeug-Getriebe anwendbar ist. Darüber hinaus betrifft die Erfindung zwei Varianten einer Vorrichtung zur Montage des Schrägrollenlagers.

### Hintergrund der Erfindung

Der als Festlager zur Lagerung der Hauptwelle in einem Kraftfahrzeug-Getriebe am häufigsten verwendete Lagertyp ist das einreihige Rillenkugellager, da dieses sich durch eine gleichermaßen hohe radiale und axiale Tragfähigkeit auszeichnet und wegen seiner geringen Reibung die höchsten Drehzahlgrenzen aller Lagerarten aufweist. Dieses Rillenkugellager besteht in bekannter Weise aus einem äußeren Lagerring und einem inneren Lagerring sowie aus einer Vielzahl zwischen den Lagerringen angeordneter Lagerkugeln, die in in die Innenseite des äußeren Lagerrings und in die Außenseite des inneren Lagerrings eingearbeitete rillenförmigen Laufbahnen abrollen und durch einen Lagerkäfig in gleichmäßigen Abständen zueinander geführt werden Das Einsetzten der Lagerkugeln in das Rillenkugellager erfolgt dabei zumeist durch das mit der DE 168 499 A1 bekannt gewordene Exzentermontageverfahren, bei dem die beiden Lagerringe exzentrisch zueinander angeordnet werden und der dadurch entstehende freie Raum zwischen den Lagerringen mit den Lagerkugeln befüllt wird, anschließend die Lagerringe unter Ausnutzung ihrer Elastizität in eine konzentrische Stellung zueinander gebracht werden und nach einer gleichmäßigen Umfangsverteilung der Lagerkugeln der Lagerkäfig eingesetzt wird

In der Praxis hat es sich jedoch erwiesen, dass derartigen Rillenkugellagern aufgrund der geringen maximal einbaubaren Anzahl von Lagerkugeln, die von den Abmessungen des inneren und des äußeren Lagerrings sowie vom Durchmesser der Lagerkugeln abhängig ist, vor allem in Bezug auf die radiale Tragfähigkeit des Lagers immer gewisse Grenzen gesetzt sind. In der Vergangenheit wurden daher eine Vielzahl von Lösungen, wie beispielsweise eine in den sich gegenüberllegenden Borden der Laufbahnen des äußeren und des inneren Lagerrings angeordnete unverschlossene Einfüllöffnung gemäß DE 151 483 A1 oder eine ähnlich ausgebildete verschließbare Einfüllöffnung gemäß DE 24 07 477 A1, vorgeschlagen, mit denen durch eine Erhöhung der Anzahl der Lagerkugeln eine Erhöhung der radialen Tragfähigkeit von Rillenkugellagern erreicht werden sollte, die sich aber aufgrund der aus solchen Einfüllöffnungen resultierenden Nachteile in der Praxis nicht durchsetzen konnten

Eine andere naheliegende Möglichkeit, die Tragfähigkeit des Festlagers zur Lagerung der Hauptwelle in einem Kraftfahrzeug-Getriebe zu erhöhen, wäre der Ersatz des bisher verwendeten Rillenkugellagers durch ein Zylinderrollenlager vom Typ NUP, wie es beispielsweise aus dem Katalog "Wälzlager" der Anmelderin vom Oktober 2008 auf den Seiten 393 und 396 bekannt ist. Dieses Zylinderrollenlager weist sowohl am inneren Lagerring als auch am äußeren Lagerring zwei seitliche Borde auf und ist zur Aufnahme hoher Radiallasten sowie von Axiallasten in beide Richtungen geeignet Derartige Zylinderrollenlager weisen jedoch durch den hohen Anteil spanender Bearbeitung, insbesondere bei der Laufbahnherstellung und bei der Bordbearbeitung, sehr hohe Fertigungskosten auf und wären zudem in ihrer Tragfähigkeit wiederum überdimensioniert, so dass diese für den Einsatz als Festlager in Kraftfahrzeug-Schaltgetrieben letztendlich ungeeignet sind.

Ein weiterer, zur als Festlager zur Lagerung der Hauptwelle in einem Kraftfahrzeug-Getriebe geeigneter und für die vorliegende Erfindung den nächstliegenden Stand der Technik bildender Lagertyp, dessen Aufnahmefähigkeit von Radialkräften und von Axialkräften in beide Richtungen größer als die von Rillenkugellagern ist, ist durch die Druckschriften DE 6 917 609 U und CH 463 886 A bekannt geworden. In diesen Druckschriften wird jeweils ein Schrägrollenlager offenbart welches im Wesentlichen aus einem inneren Lagerring mit einer an dessen äußerer Mantelfläche schräg zur radialen Lagerachse angeordneten inneren Laufbahn und einem diese Laufbahn an ihrem kleinsten Durchmesser begrenzenden Bord, aus einem äußeren Lagerring mit einer an dessen innerer Mantelfläche ebenfalls schräg zur radialen Lagerachse angeordneten äußeren Laufbahn und einem diese Laufbahn an ihrem größten Durchmesser begrenzenden Bord sowie aus einer Vielzahl zwischen den Lagerringen angeordneter und auf deren Laufbahnen abrollender Rollenwälzkörper besteht, die in Umfangsnchtung durch einen Lagerkäfig in gleichmäßigen Abständen zueinander gehalten werden. Zur Ermöglichung des Einsetzens der als Kegelrollen ausgebildeten Wälzkörper in den jeweils als Taschen- bzw. als Fensterkäfig ausgebildeten Lagerkäfig ist bei dem Schrägrollenlager gemäß DE 6 917 609 U der Bord am inneren Lagerring und bei dem Schrägrollenlager gemäß CH 463 886 A der Bord am äußeren Lagerring als separates Bauteil ausgebildet, der nach der Lagermontage am inneren bzw äußeren Lagerring befestigt wird. Dies erfolgt bei dem Schrägrollenlager gemäß DE 6 917 609 U durch einen gesonderten geschützten, im Querschnitt U-förmigen Ring, dessen radiale Schenkel in entsprechende Nuten im Bord und im inneren Lagerring eingreifen, und bei dem Schrägrollenlager gemäß CH 463 886 A durch einen an die Unterseite des Bordes angeformten umlaufenden Bund, der in den äußeren Lagerring eingepresst wird

Bei derartigen Schrägrollenlagern sind zwar dadurch, dass nur noch einer der Lagerringe mit nur noch einem seitlichen Bord einteilig ausgebildet ist, der Anteil der spanenden Bearbeitung bei der Laufbahnherstellung und bei der Bordbearbeitung und damit auch die Gesamtkosten für die Lagerfertigung wesentlich geringer als bei dem vorbeschriebenen Zylinderrollenlager, dennoch wirkt sich bei diesen Schrägrollenlagern die Ausbildung des Bordes am jeweils anderen Lagerring als separate Bordscheibe, deren zusätzliche Montage an diesem Lagerring sowie die erforderliche Präzisionsfertigung der Anlageflächen an diesen und dem zugehörigen Lagerring ungünstig auf deren Herstellungskosten aus Außerdem besteht bei diesen Schrägrollenlagern die Gefahr, dass die Befestigung der separaten Bordscheibe nicht ausreichend ist, um auch hohen radialen oder axialen Belastungsspitzen standzuhalten, so dass sich die Bordscheibe im Lagerbetrieb lösen kann und es letztendlich zum Lagerausfall kommt. Aus der DE 87 13 057 U ist ein Schrägrollenlager bekannt, dessen beide Lagerringe jeweils nur einen einteilig ausgebildeten Bord aufweisen.

### Aufgabe der Erfindung

Ausgehend von den dargelegten Nachteilen der Lösungen des bekannten Standes der Technik liegt der Erfindung deshalb die Aufgabe zu Grunde, eine kostengünstige Herstellung eines insbesondere einreihigen Schrägrollenlagers mit jeweils einseitig laufbahnbegrenzenden Borden zu ermöglichen.

### Beschreibung der Erfindung

Erfindungsgemäß wird diese Aufgabe durch ein Verfahren mit den Merkmalen gemäß Patentanspruch 1 gelöst. Ferner wird die Aufgabe mit einer Vorrichtung gemäß Patentanspruch 13 und eine Vorrichtung gemäß Patentanspruch 14 gelöst. Vorteilhafte Weiterbildungen der Erfindung sind den jeweils abhängigen Patentansprüchen zu entnehmen.

Mit dem erfindungsgemäßen Verfahren gefertigte Schrägrollenlager zeichnen sich dadurch aus, dass eine Tangente an die äußere Mantelfläche des inneren Lagerrings und eine Tangente an die die innere Mantelfläche des äußeren Lagerrings zumindest im Bereich der Laufbahnen gegensinnig schräg zur Lagerrotationsachse verlaufend eben ausgebildet und die Laufbahnen beider Lagerringe jeweils kegelförmig in diese Mantelflächen eingearbeitet sind und dass die dabei entstehenden und die Laufbahnen jeweils einseitig begrenzenden Borde dadurch jeweils einteilig mit den Lagerringen ausgebildet sind.

Bevorzugt ist vorgesehen, dass die Rollenwälzkörper bevorzugt als Kegelrollen ausgebildet sind, die einen Kegelwinkel im Bereich von 2° bis 6° aufweisen und in einem Hüllkreiswinkel zwischen 7° bis 20° auf ihren Laufbahnen abrollen Bei Anwendung des so ausgebildeten Schrägrollenlagers als Festlager zur Lagerung der Hauptwelle in einem Kraftfahrzeug-Getriebe haben sich dabei aufgrund der auftretenden Radial- und Axiallasten ein Kegelwinkel von 4° und ein Hüllkreiswinkel von 14° als besonders geeignet erwiesen. Es ist jedoch anzumerken, dass das erfindungsgemäße Verfahren nicht auf eine Herstellung von Kegelrollenlager beschränkt sein soll, da in gleicher Weise auch andere Rollenlager mit schräg zur Lagermittelachse angeordneten Rolenachsen derart gefertigt werden können So können anstelle der beispielhaft angeführten Kegelrollen auch Zylinderrollen oder Nadeln oder Rollen mit sphärischen Mantelflächen, wie Pendel- oder Tonnenrollen, verwendet werden.

Ferner ist es vorteilhaft, dass der an der kleineren Durchmesserseite der Rollenwälzkörper bestehende Spalt zwischen den Lagerringen kleiner bemessen wird als der an der größeren Durchmesserseite der Rollenwälzkörper bestehende Spalt zwischen den Lagerringen und so bemessen wird, dass das Zweifache seines Maßes größer als der größte Durchmesser der Rollenwälzkörper ist. Eine solche Dimensionierung des Spaltes zwischen dem inneren und dem äußeren Lagerring ist notwendig, um das Einsetzen der Rollenwälzkörper in das Schrägrollenlager nach dem beschriebenen Montageverfahren zu ermöglichen.

Darüber hinaus ist es vorteilhaft, dass der die Laufbahn im inneren Lagerring begrenzende Bord eine Mindesthöhe von ca. 33% und der die Laufbahn im äußeren Lagerring begrenzende Bord eine Mindesthöhe von ca. 21 % des größten Durchmessers der Rollenwälzkörper aufweist. Durch eine solche Ausbildung der Borde und der damit einhergehenden Laufbahntiefe ist gewährleistet, dass im Lagerbetrieb auftretende hohe Axialkräfte in die eine Richtung mit möglichst geringer Bordreibung aufgenommen werden können, während geringere Axialkräfte in die andere Richtung über die schrägen Laufbahnen aufgenommen werden.

Ferner ist es vorteilhaft, wenn nach der Montage der Rollenwälzkörper ein aus einem Käfigring sowie aus einer Vielzahl von axialen Käfigstegen bestehenden Kammkäfig in das Radialwälzlager eingesetzt wird Dieser Lagerkäfig weist an seinen Käfigstegen zusätzlich mehrere gleichmäßig umfangsverteilte und einen kleineren Innendurchmesser als der Käfigring aufweisende Rastnasen auf, durch die der Lagerkäfig entweder an der Innenfläche des Bordes am inneren Lagerrings oder an der Innenfläche des Bordes am äußeren Lagerring axial lagefixierbar ist. Diese Rastnasen werden beim Einsetzen des Lagerkäfigs in das Schrägrollenlager zunächst solange elastisch in Richtung der Käfigstege verformt, bis diese beim Einsetzen des Lagerkäfigs von der kleinen Durchmesserseite der Kegelrollen her hinter den Bord am inneren Lagerring und beim Einsetzen des Lagerkäfigs von der großen Durchmesserseite der Kegelrollen her hinter dem Bord am äußeren Lagerring einrasten. Dadurch wird der durch das Anliegen des Lagerkäfigs an den einen Stirnseiten der Rollenwälzkörper bisher nur in die eine Axialrichtung lagefixierte Lagerkäfig auch in die andere Axialrichtung lagefixiert. Auch hier ist jedoch zu bemerken, dass die Verwendung eines Kammkäfigs als Lagerkäfig nicht auf diese Käfigart beschränkt ist, da es auch möglich ist, den Lagerkäfig als zweiteiligen Blechnietkäfig auszubilden.

Erfindungsgemäß wird die Aufgabe durch ein Verfahren zur Herstellung eines Schrägrollenlagers nach Patentanspruch 1 gelöst, welches folgende Schritte umfasst:
- Erzeugen einer äußeren Mantelfläche (3) auf einem inneren Lagerring (2), die in axialer Richtung gegenüber der Lagerrotationsachse (A_{L}) in einer ersten Neigungsrichtung geneigt ist,
- Erzeugen einer inneren Mantelfläche (7) auf einem äußeren Lagerring (6), die in axialer Richtung gegenüber der Lagerrotationsachse (A_{L}) in einer zweiten Neigungsrichtung geneigt ist, wobei die zweite Neigungsrichtung entgegengesetzt der ersten Neigungsrichtung orientiert ist,
- Kegelförmiges Einarbeiten einer inneren Laufbahn (4) in die äußere Mantelfläche (3) des inneren Lagerringes (2), so dass die innere Laufbahn (4) gegenüber der Lagerrotationsachse (A_{L}) geneigt und an genau einem Ende durch einen Bord (5) begrenzt ist.
- Kegelförmiges Einarbeiten einer äußeren Laufbahn (8) in die innere Mantelflache (7) des äußeren Lagerringes (6), so dass die äußere Laufbahn (8) gegenüber der Lagerrotationsachse (A_{L}) geneigt und an genau einem Ende durch einen Bord (9) begrenzt ist,
- Montage des inneren und äußeren Lagerringes (2,6) sowie einer Vielzahl auf deren Laufbahnen abrollender Rollenwälzkörper (10) nach einem an sich als Montageverfahren für Rillenkugellager bekannten Exzentermontagerverfahren.

Bei einer ersten Variante dieses Exzentermontageverfahrens wird dabei in einem ersten Schritt der innere Lagerring mit seiner mit dem Bord ausgebildeten Stirnseite auf eine horizontale Montageebene mit einer konvexen sichelförmigen Hilfsrampe derart aufgelegt, dass dieser mit seinem Bord an der Innendurchmesserseite der Hilfsrampe anliegt. Danach wird in einem zweiten Schritt der äußere Lagerring mit seiner mit dem Bord ausgebildeten Stirnseite nach oben derart exzentrisch zum inneren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Als dritter Schritt wird dann der entstandene sichelförmige Freiraum zwischen dem äußeren Lagerring und dem inneren Lagerring mit den als Kegelrollen ausgebildeten Rollenwälzkörpern derart befüllt, dass deren kleinere Stirnseiten auf der Schrägseite der Hilfsrampe aufliegen.

Eine zweite Variante des Exzentermontageverfahrens unterscheidet sich von der ersten Variante dadurch, dass in einem ersten Schritt der äußere Lagerring mit seiner mit dem Bord ausgebildeten Stirnseite auf eine horizontale Montageebene mit einer konvexen sichelförmigen Hilfsrampe derart aufgelegt wird, dass dieser mit seinem Bord an der Außendurchmesserseite der Hilfsrampe anliegt Danach wird in einem zweiten Schritt der innere Lagerring mit seiner mit dem Bord ausgebildeten Stirnseite nach oben derart exzentrisch zum äußeren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Der dritte Schritt dieser Variante besteht dann wieder darin, dass der entstandene sichelförmige Freiraum zwischen dem inneren Lagerring und dem äußeren Lagerring mit den als Kegelrollen ausgebildeten Rollenwälzkörpern derart befüllt wird, dass dabei deren größere Stirnseiten auf der Schrägseite der Hilfsrampe aufliegen

Unabhängig von den beiden Varianten des Exzentermontageverfahrens wird dann in einem vierten Schritt der äußere Lagerring in Höhe des Berührungspunktes mit dem inneren Lagerring sowie in Höhe eines dem Berührungspunkt um 180° versetzten Punktes an dessen Außenmantelfläche derart eingespannt, dass der äußere Lagerring innerhalb seiner Elastizitätsgrenze geringfügig ovalisiert wird. Anschließend werden in einem fünften Schritt der innere Lagerring in eine koaxiale Lage zum äußeren Lagerring verschoben und die Rollenwälzkörper in ihren Laufbahnen in den Lagerringen unter Aufhebung der Ovalisierung des äußeren Lagerrings gleichmäßig umfangsverteilt.

Bei Anwendung der ersten Variante des erfindungsgemäßen Exzentermontageverfahrens wird danach in einem sechsten Schritt der als Kammkäfig ausgebildete Lagerkäfig mit seinen Käfigstegen zwischen die Rollenwälzkörper von der Seite mit deren kleineren Stirnseiten her eingeführt und an der Innenfläche des Bordes am inneren Lagerring verrastet. Bei Anwendung der zweiten Variante des erfindungsgemäßen Exzentermontageverfahrens wird dagegen in einem letzten Schritt der als Kammkäfig ausgebildete Lagerkäfig mit seinen Käfigstegen zwischen die Rollenwälzkörper von der Seite mit deren größeren Stirnseiten her eingeführt und an der Innenfläche des Bordes am äußeren Lagerrings verrastet.

Schließlich wird die gestellte Aufgabe auch noch durch zwei Varianten einer Vorrichtung zur Durchführung des beschriebenen Montageverfahrens gelöst

Zur Durchführung der ersten Variante des erfindungsgemäßen Exzentermontageverfahrens wird es dabei vorgeschlagen, dass die mit ihrer Innendurchmesserseite am inneren Lagerring anliegende Hilfsrampe eine sich zum äußeren Lagerring hin mit dem Neigungswinkel der Laufbahn im inneren Lagerring verjüngende Schrägseite sowie eine maximale Rampenhöhe aufweist, die der Höhe des Bordes am inneren Lagerring entspricht. Zur Durchführung der zweiten Variante des erfindungsgemäßen Exzentermontageverfahrens wird es dagegen gemäß vorgeschlagen, dass die mit ihrer Außendurchmesserseite am äußeren Lagerring anliegende Hilfsrampe eine sich zum inneren Lagerring hin mit dem Neigungswinkel der Laufbahn im äußeren Lagerring verjüngende Schrägseite sowie eine maximale Rampenhöhe aufweist, die der Höhe des Bordes am äußeren Lagerring entspricht.

Zusammenfassend dienen das erfindungsgemäße Verfahren sowie die erfindungsgemäßen Vorrichtungen der Herstellung eines insbesondere einreihigen Schrägrollenlagers, das gegenüber den aus dem Stand der Technik bekannten einreihigen Schrägrollenlagern den Vorteil aufweist, dass es trotz des mit dem Exzentermontageverfahren maximal erreichbaren Wälzkörperfüllgrades von ca. 60 % eine höhere Tragfähigkeit als ein gleichartig montiertes einreihiges Rillenkugellager aufweist, da die verwendeten Rollenwälzkörper nicht mehr wie bei Lagerkugeln im Punktkontakt sondern im Linienkontakt zu ihren Laufbahnen stehen. Hinsichtlich der erreichbaren Tragfähigkeit reiht sich dabei ein erfindungsgemäß ausgebildetes Schrägrollenlager als komplett neuer Lagertyp [z. B. Baureihe ARU (Angular Roller Unit) 207 = 40 kN] etwa in der Mitte zwischen der Tragfähigkeit eines einreihigen Rillenkugellagers [z. B. Baureihe 6207 = 25,5 kN] und der Tragfähigkeit eines einreihigen Zylinderrolienlagers [z B. Baureihe NUP 207E = 56 kN] ein. Darüber hinaus hält sich der Anteil der spanenden Bearbeitung bei der Herstellung und Bearbeitung der Laufbahnen und der Borde des erfindungsgemäßen Schrägrollenlagers durch die in die schräg verlaufenden ebenen inneren und äußeren Mantelflächen beider Lagerringe einfach kegelförmig eingearbeiteten Laufbahnen in vertretbaren Kostengrenzen und es sind gleichzeitig durch die dabei entstehenden, einteilig mit den Lagerringen ausgebildeten Borde keine separaten Bordscheiben mehr notwendig. Im Zusammenhang mit dem Exzentermontageverfahren für die Rollenwälzkörper und mit dem verwendeten Kammkäfig zeichnet sich das erfindungsgemäße Schrägrollenlager somit insgesamt durch einen niedrigen Montageaufwand und damit durch geringe Gesamtkosten für die Lagerfertigung aus.

### Kurze Beschreibung der Zeichnungen

Eine bevorzugte Ausfuhrungsform eines Schrägrollenlagers sowie zwei alternative Varianten des erfindungsgemäßen Verfahrens zu dessen Montage und zwei zugehörige Vorrichtungen zur Durchführung dieser Verfahrensvarianten werden nachfolgend unter Bezugnahme auf die beigefügten Zeichnungen näher erläutert Dabei zeigen:
- Figur 1: eine vergrößerte Darstellung eines Querschnittes durch ein einreihiges Schrägrollenlager mit einteilig mit den Lagerringen ausgebildeten Borden:
- Figur 2a. 2b: eine Darstellung des ersten Schrittes der ersten Variante des erfindungsgemäßen Montageverfahrens in einer Draufsicht und einer Schnittansicht;
- Figur 3a. 3b: eine Darstellung des zweiten Schrittes der ersten Variante des erfindungsgemäßen Montageverfahrens in einer Draufsicht und einer Schnittansicht;
- Figur 4a. 4b: eine Darstellung des dritten Schrittes der ersten Variante des erfindungsgemäßen Montageverfahrens in einer Draufsicht und einer Schnittansicht;
- Figur 5a. 5b: eine Darstellung des ersten Schrittes der zweiten Variante des erfindungsgemäßen Montageverfahrens in einer Draufsicht und einer Schnittansicht;
- Figur 6a. 6b: eine Darstellung des zweiten Schrittes der zweiten Variante des erfindungsgemäßen Montageverfahrens in einer Draufsicht und einer Schnittansicht;
- Figur 7a. 7b: eine Darstellung des dritten Schrittes der zweiten Variante des erfindungsgemäßen Montageverfahrens in einer Draufsicht und einer Schnittansicht;
- Figur 8a. 8b: eine Darstellung des fünften Schrittes beider Varianten des erfindungsgemäßen Montageverfahrens in einer Draufsicht und einer Schnittansicht;
- Figur 9a, 9b: eine Darstellung des sechsten Schrittes beider Varianten des erfindungsgemäßen Montageverfahrens in einer Draufsicht und einer Schnittansicht:
- Figur 10a, 10b: eine Darstellung der Hilfsrampe zur Durchführung der ersten Variante des erfindungsgemäßen Montageverfahrens in einer Draufsicht und einer Schnittansicht;
- Figur 11a, 11b: eine Darstellung der Hilfsrampe zur Durchführung der zweiten Variante des erfindungsgemäßen Montageverfahrens in einer Draufsicht und einer Schnittansicht:

### Ausführliche Beschreibung der Zeichnungen

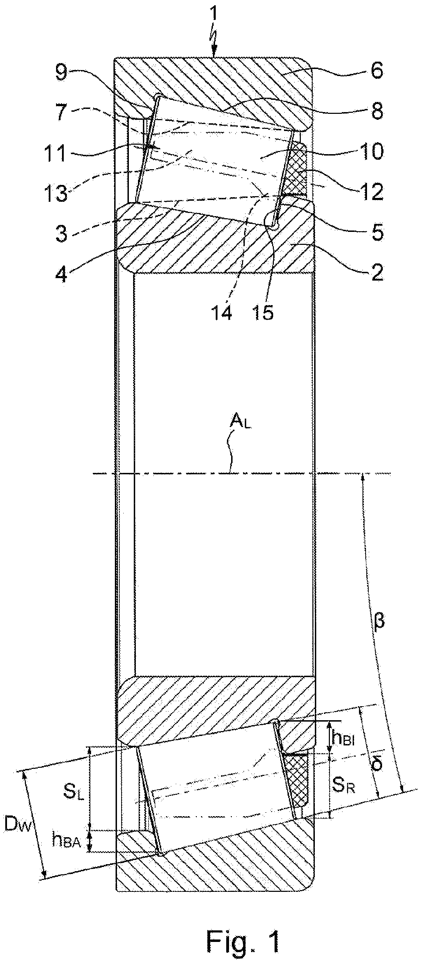

in Figur 1 ist ein Querschnitt eines einreihigen Schrägrollenlagers 1 dargestellt, welches beispielsweise als Ersatz des bisher als Festlager verwendeten Rillenkugellagers zur Lagerung der Hauptwelle in Kraftfahrzeug-Getrieben geeignet ist. Deutlich sichtbar besteht dieses Schrägrollenlager 1 aus einem inneren Lagerring 2 mit einer an dessen äußerer Mantelfläche 3 schräg zur Lagermittelachse A_{L} angeordneten inneren Laufbahn 4. die an ihrem kleinsten Durchmesser durch einen Bord 5 begrenzt wird, sowie aus einem äußeren Lagerring 6 mit einer an dessen innerer Mantelfläche 7 ebenfalls schräg zur Lagermittelachse A_{L} angeordneten äußeren Laufbahn 8. die an ihrem größten Durchmesser durch einen Bord 9 begrenzt wird. Zwischen den Lagerringen 2, 6 ist darüber hinaus eine Vielzahl auf deren Laufbahnen 4. 8 abrollender Rollenwälzkörper 10 angeordnet, die in Umfangsrichtung durch einen Lagerkäfig 11 in gleichmäßigen Abständen zueinander gehalten werden

Desweiteren ist in Figur 1 durch die gestrichelten Linien in der oberen Lagerhälfte angedeutet, dass eine Tangente an die äußere Mantelfläche 3 des inneren Lagerrings 2 und eine Tangente an die innere Mantelfläche 7 des äußeren Lagerrings 6 zumindest im Bereich der Laufbahnen 4. 8 gegensinnig schräg zur Lagerrotationsachse A_{L} verlaufend eben ausgebildet und die Laufbahnen 4. 8 beider Lagerringe 2, 6 jeweils kegelförmig in diese Mantelflächen 3. 7 eingearbeitet sind. Die dabei entstehenden und die Laufbahnen 4. 8 jeweils einseitig begrenzenden Borde 5, 9 sind dadurch jeweils einteilig mit den Lagerringen 2, 6 ausgebildet.

Ebenso ist aus Figur 1 ersichtlich, dass die Rollenwälzkörper 10 als Kegelrollen ausgebildet sind, die einen Kegelwinkel δ von bevorzugt 4° aufweisen und in einem Hüllkreiswinkel β von bevorzugt 14° auf ihren Laufbahnen 4. 8 abrollen. Außerdem ist der an der kleineren Durchmesserseite der Rollenwälzkörper 10 bestehende Spalt S_{R} zwischen den Lagerringen 2, 4 kleiner als der an der größeren Durchmesserseite der Rollenwälzkörper 10 bestehende Spalt S_{L} zwischen den Lagerringen 2, 4 ausgebildet und so bemessen, dass das zweifache seines Maßes größer als der größte Durchmesser D_{w} der Rollenwälzkörper 10 ist, um das Einsetzen der Rollenwälzkörper 10 in das Schrägrollenlager 1 nach dem Exzentermontageverfahren zu ermöglichen. Zusätzlich weist der die Laufbahn 4 im inneren Lagerring 2 begrenzende Bord 5 eine Mindesthöhe h_{BI} von ca. 33% und der die Laufbahn 8 im äußeren Lagerring 6 begrenzende Bord 9 eine Mindesthöhe h_{BA} von ca. 21% des größten Durchmessers D_{W} der Rollenwälzkörper 10 auf, um im Lagerbetrieb auftretende hohe Axialkräfte in die eine Richtung mit möglichst geringer Bordreibung aufnehmen zu können.

Schließlich ist in Figur 1 noch erkennbar, dass der Lagerkäfig 11 bevorzugt durch einen nach der Montage der Rollenwälzkörper 10 in das Radialwälzlager 1 einsetzbaren Kammkäfig gebildet wird. Der aus einem Käfigring 12 sowie aus einer Vielzahl von axialen Käfgstegen 13 bestehende Lagerkäfig 11 weist dabei an seinen verdeckt dargestellten Käfigstegen 13 mehrere ebenfalls verdeckt dargestellte, gleichmäßig umfangsverteilte und einen kleineren Innendurchmesser als der Käfigring 12 aufweisende Rastnasen 14 auf, durch die der Lagerkäfig 11 an der Innenfläche 15 des Bordes 5 am inneren Lagerring 2 axial lagefixierbar ist.

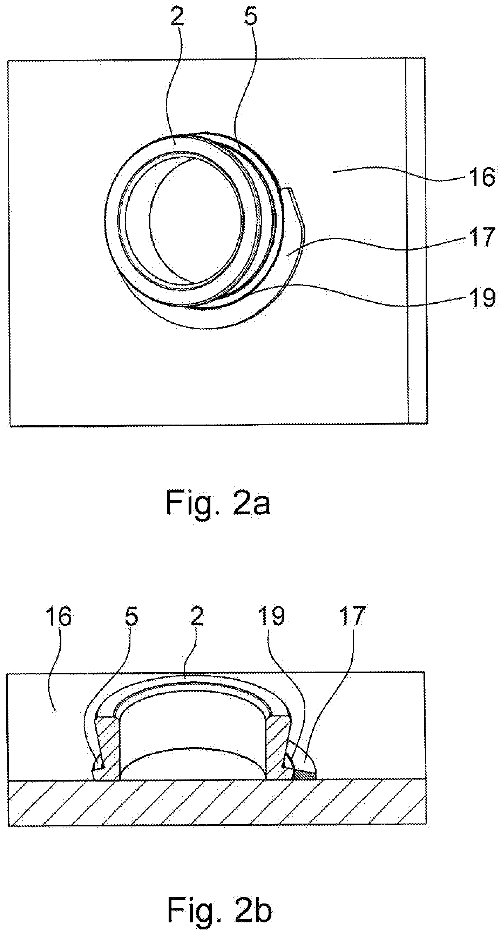

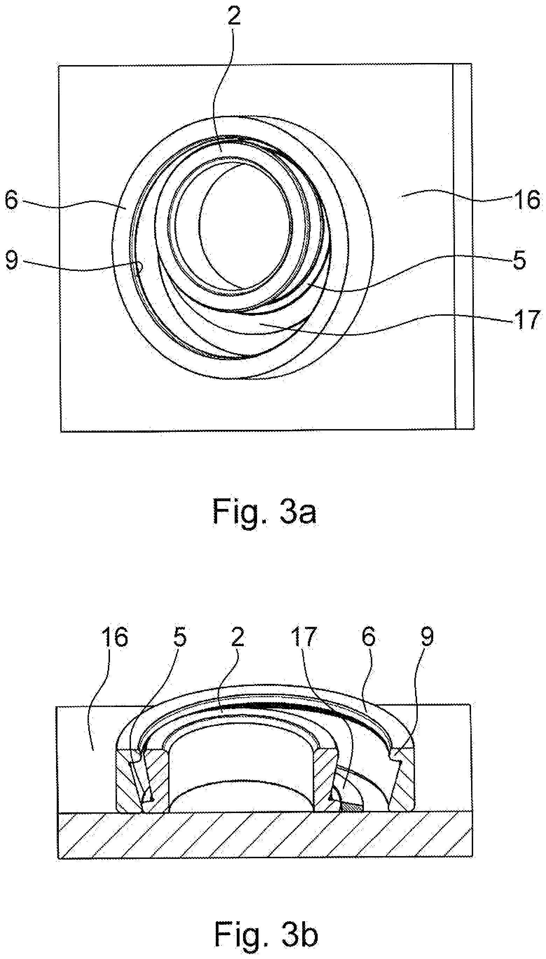

In den Figuren 2a, 2b, 3a. 3b und 4a, 4b sind desweiteren die ersten Schritte einer ersten Variante eines Montageverfahrens für das erfindungsgemäße Schrägrollenlager 1 schematisch dargestellt. Dieses Montageverfahren ist im Wesentlichen ein an sich als Montageverfahren für Rillenkugellager bekanntes, modifiziertes Exzentermontageverfahren, bei dem, wie in den Figuren 2a und 2b zu sehen ist, in einem ersten Schritt der innere Lagerring 2 mit seiner mit dem Bord 5 ausgebildeten Stirnseite auf eine horizontale Montageebene 16 mit einer konvexen sichelförmigen Hilfsrampe 17 derart aufgelegt wird, dass dieser mit seinem Bord 5 an der Innendurchmesserseite 19 der Hilfsrampe 17 anliegt.

Danach wird in einem zweiten Schritt der äußere Lagerring 6 mit seiner mit dem Bord 9 ausgebildeten Stirnseite nach oben derart exzentrisch zum inneren Lagerring 2 angeordnet, dass, wie in den Figuren 3a und 3b deutlich sichtbar, einerseits die Hilfsrampe 17 zwischen den Lagerringen 2, 6 angeordnet ist und andererseits um 180° zur Mitte der Hilfsrampe 17 versetzt die Lagerringe 2. 6 aneinander anliegen.

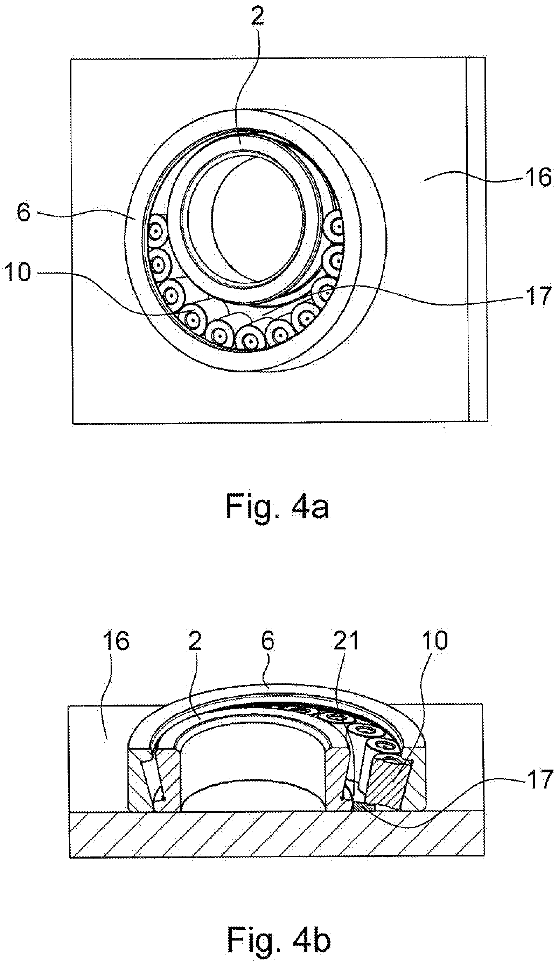

In einem dritten, in den Figuren 4a und 4b dargestellten Schritt wird dann der entstandene sichelförmige Freiraum zwischen dem äußeren Lagerring 6 und dem inneren Lagerring 2 mit den als Kegelrollen ausgebildeten Rollenwälzkörpern 10 derart befüllt, dass deren kleinere Stirnseiten auf der Schrägseite 21 der Hilfsrampe 17 aufliegen.

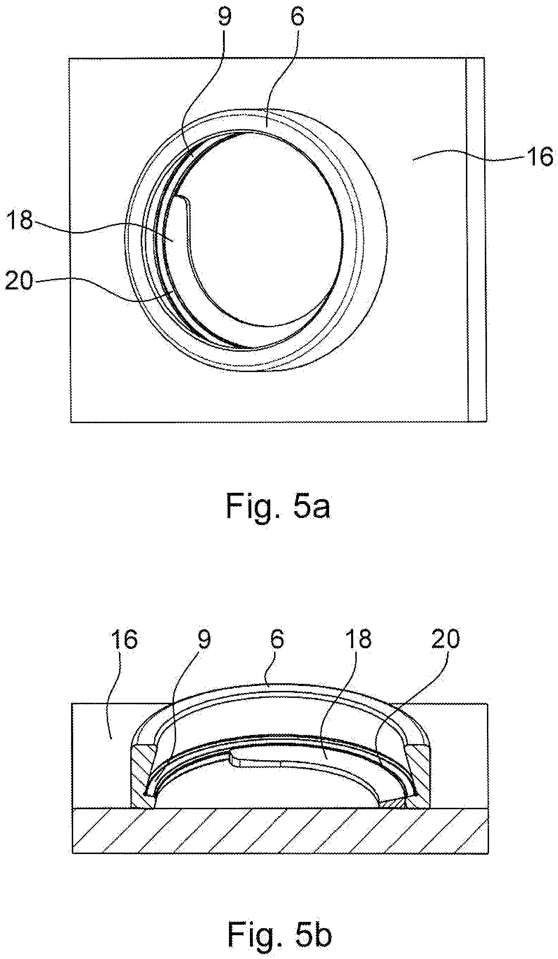

Die in den Figuren 5a. 5b. 6a. 6b und 7a, 7b dargestellte zweite Variante des Montageverfahrens für das erfindungsgemäße Schrägrollenlager ist ebenfalls ein modifiziertes Exzentermontageverfahren und unterscheidet sich von der ersten Variante dadurch, dass bei dem in den Figuren 5a und 5b abgebildeten ersten Schritt diesmal der äußere Lagerring 6 mit seiner mit dem Bord 9 ausgebildeten Stirnseite auf eine horizontale Montageebene 16 mit einer konvexen sichelförmigen Hilfsrampe 18 derart aufgelegt wird, dass dieser mit seinem Bord 9 an der Außendurchmesserseite 20 der Hilfsrampe 18 anliegt.

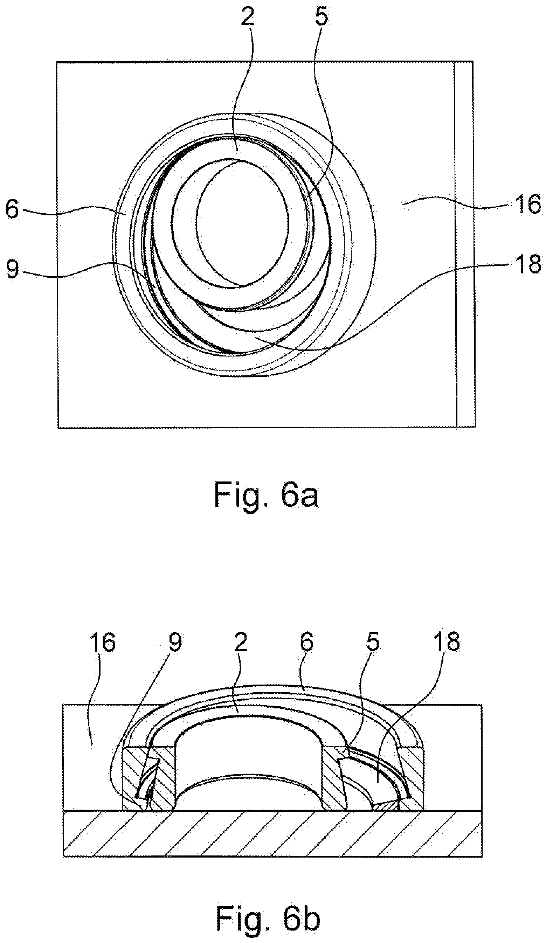

Ähnlich wie bei der ersten Variante wird danach in einem zweiten Schritt der innere Lagerring 2 mit seiner mit dem Bord 5 ausgebildeten Stirnseite nach oben derart exzentrisch zum äußeren Lagerring 6 angeordnet, dass, wie in den Figuren 6a und 6b erkennbar ist, einerseits die Hilfsrampe 18 zwischen den Lagerringen 2, 6 angeordnet ist und andererseits um 180° zur Mitte der Hilfsrampe 18 versetzt die Lagerringe 2. 6 aneinander anliegen

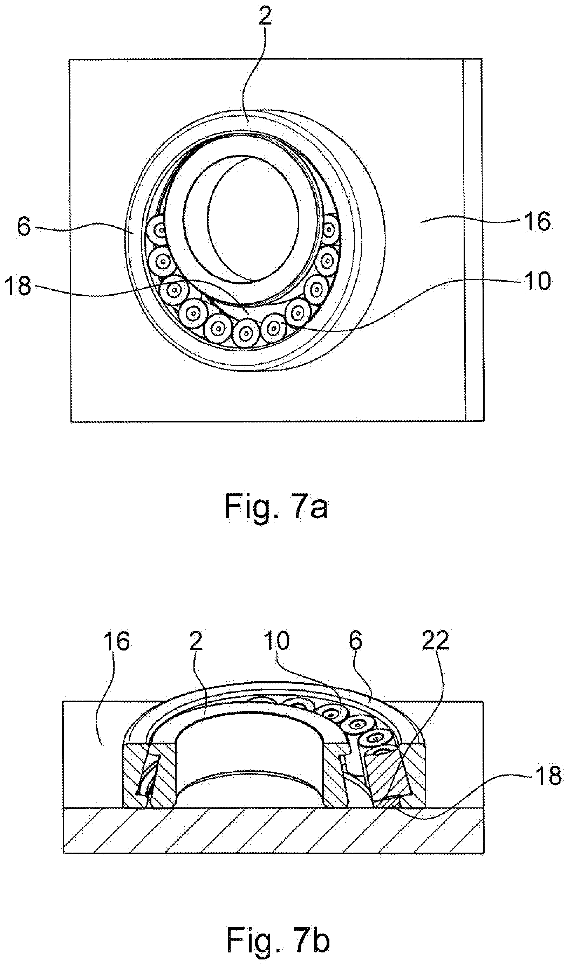

In einem dritten, in den Figuren 7a und 7b dargestellten Schritt wird dann auch hier der entstandene sichelförmige Freiraum zwischen dem inneren Lagerring 2 und dem äußeren Lagerring 6 mit den als Kegelrollen ausgebildeten Rollenwälzkörpern 10 befüllt, jedoch mit dem Unterschied, dass hierbei die größeren Stirnseiten der Rolleriwälzkörper 10 auf der Schrägseite 22 der Hilfsrampe 18 aufliegen.

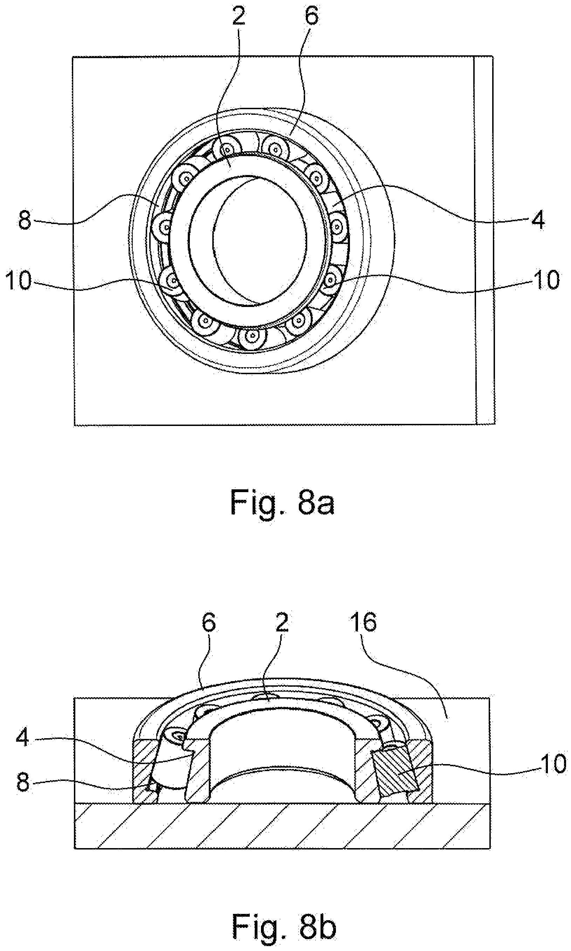

Unabhängig von den beiden Varianten des Exzentermontageverfahrens wird dann in einem vierten, in den Zeichnungen nicht näher dargestelltem Schritt der äußere Lagerring 3 in Höhe des Berührungspunktes mit dem inneren Lagerring 2 sowie in Höhe eines dem Berührungspunkt um 180° versetzten Punktes an dessen Außenmantelfläche derart eingespannt wird, dass der äußere Lagerring 3 innerhalb seiner Elastizitätsgrenze geringfügig ovalisiert wird. Anschließend wird, wie aus den Figuren 8a und 8b ersichtlich ist, in einem fünften Schritt der innere Lagerring 2 in eine koaxiale Lage zum äußeren Lagerring 3 verschoben, um die Rollenwälzkörper 10 in den Lagerringen 2, 6 unter Aufhebung der Ovalisierung des äußeren Lagerrings 3 gleichmäßig umfangsverteilt in ihren Laufbahnen 4, 8 anzuordnen.

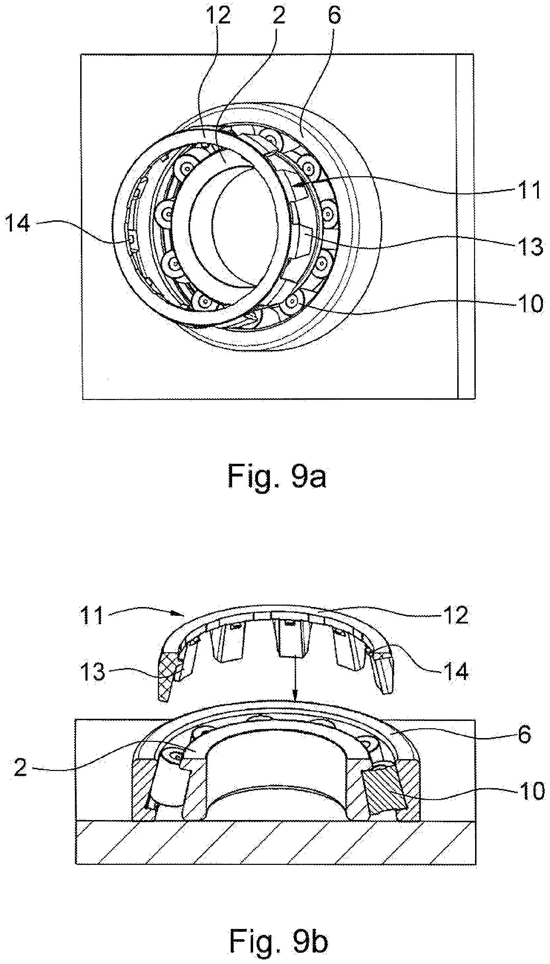

Bei Anwendung der ersten Variante des erfindungsgemäßen Exzentermontageverfahrens wird danach in einem sechsten, aus Gründen der Vereinfachung in den Zeichnungen jedoch nicht dargestellten Schritt der als Kammkäfig ausgebildete Lagerkäfig 11 mit seinen Käfigstegen 13 zwischen die Rollenwälzkörper 10 von der Seite mit deren größeren Stirnseiten her eingeführt und mit seinen Raststegen an der Innenfläche des Bordes 9 am äußeren Lagerring 6 verrastet. Bei Anwendung der zweiten Variante des erfindungsgemäßen Exzentermontageverfahrens wird dagegen in einem sechsten Schritt der als Kammkäfig ausgebildete Lagerkäfig 11, wie in den Figuren 9a und 9b abgebildet, mit seinen Käfigstegen 13 zwischen die Rollenwälzkörper 10 von der Seite mit deren kleineren Stirnseiten her eingeführt und, wie in Figur 1 gezeigt, mit seinen Rastnasen 14 an der Innenfläche 15 des Bordes 5 am inneren Lagerring 2 verrastet.

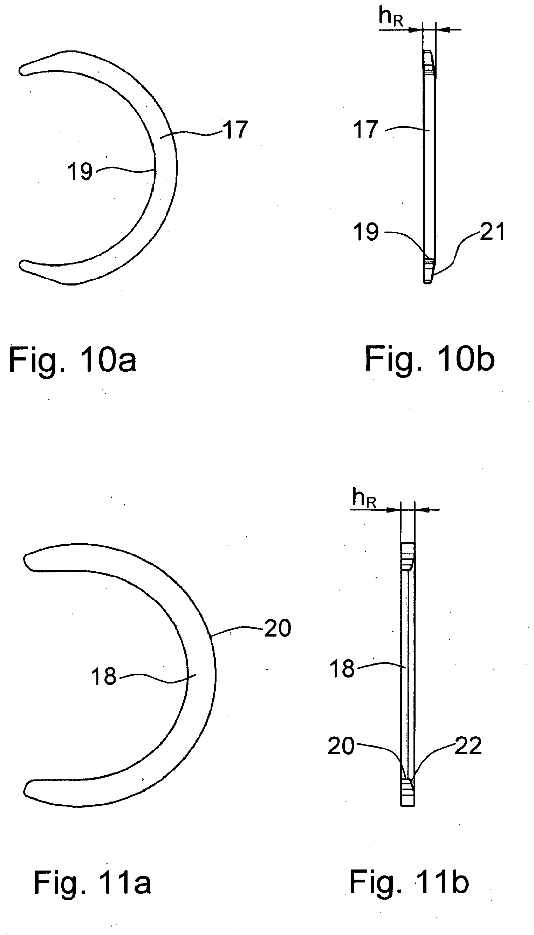

In den Figuren 10a, 10b und 11a, 11b sind schließlich noch die Hilfsrampen 17 und 18 zur Durchführung beider Varianten des erfindungsgemäßen Exzentermontageverfahrens dargestellt. Die für die erste Verfahrensvariante verwendete Hilfsrampe 17 zeichnet sich dabei dadurch aus, dass diese mit ihrer Innendurchmesserseite 19 am inneren Lagerring 2 anliegt und, wie in den Figuren 10a und 10b deutlich sichtbar ist, eine sich zum äußeren Lagerring 6 hin mit dem Neigungswinkel der Laufbahn 4 im inneren Lagerring 2 verjüngende Schrägseite 21 sowie eine maximale Rampenhöhe h_{R} aufweist, die der Bordhöhe h_{BI} am inneren Lagerring 2 entspricht.

Die für die zweite Verfahrensvariante verwendete Hilfsrampe 18 zeichnet sich dagegen dadurch aus, dass diese mit ihrer Außendurchmesserseite 20 am äußeren Lagerring 6 anliegt und, wie in den Figuren 11a und 11b zu sehen ist, eine sich zum inneren Lagerring 2 hin mit dem Neigungswinkel der Laufbahn 8 im äußeren Lagerring 6 verjüngende Schrägseite 22 sowie eine maximale Rampenhöhe h_{R} aufweist, die der Bordhöhe h_{BA} am äußeren Lagerring 6 entspricht.

**Bezugszahlenliste**

| | | | |
|---|---|---|---|
| 1 | Radialwälzlager | A_{L} | Lagermittelachse |
| 2 | innerer Lagerring | δ | Kegelwinkel |
| 3 | Tangente an die äußere Mantelfläche von 2 | β | Hüllkreiswinkel |
| | | S_{L} | Spalt zwischen 2 und 6 |
| 4 | innere Laufbahn in 2 | S_{R} | Spalt zwischen 2 und 6 |
| 5 | Bord an 4 | D_{W} | größter Durchmesser von 10 |
| 6 | äußerer Lagerring | h_{B1} | Bordhöhe an 2 |
| 7 | Tangente an die innere Mantelfläche von 6 | h_{BA} | Bordhöhe an 6 |
| | | h_{R} | Rampenhöhe |
| 8 | äußere Laufbahn in 6 | | |
| 9 | Bord an 8 | | |
| 10 | Rollenwälzkörper | | |
| 11 | Lagerkäfig | | |
| 12 | Käfigring von 11 | | |
| 13 | Käfigstege an 12 | | |
| 14 | Rastnasen an 13 | | |
| 15 | Innenfläche von 5 | | |
| 16 | Montageebene | | |
| 17 | Hilfsrampe | | |
| 18 | Hilfsrampe | | |
| 19 | Innendurchmesserseite von 17 | | |
| 20 | Außendufchmesserseite von 18 | | |
| 21 | Schrägseite an 17 | | |
| 22 | Schrägseite an 18 | | |

## Patentansprüche

1. Verfahren zur Herstellung eines Schrägrollenlagers mit einseitig begrenzenden Borden (5, 9) mit folgenden Verfahrensschritten:
• Erzeugen einer äußeren Mantelfläche (3) auf einem inneren Lagerring (2), die in axialer Richtung gegenüber der Lagerrotationsachse (A_{L}) in einer ersten Neigungsrichtung geneigt ist,
• Erzeugen einer inneren Mantelfläche (7) auf einem äußeren Lagerring (6), die in axialer Richtung gegenüber der Lagerrotationsachse (A_{L}) in einer zweiten Neigungsrichtung geneigt ist, wobei die zweite Neigungsrichtung entgegengesetzt der ersten Neigungsrichtung orientiert ist,
• Kegelförmiges Einarbeiten einer inneren Laufbahn (4) in die äußere Mantelfläche (3) des inneren Lagerringes (2), so dass die innere Laufbahn (4) gegenüber der Lagerrotationsachse (A_{L}) geneigt und an genau einem Ende durch einen Bord (5) begrenzt ist.
• Kegelförmiges Einarbeiten einer äußeren Laufbahn (8) in die innere Mantelfläche (7) des äußeren Lagerringes (6), so dass die äußere Laufbahn (8) gegenüber der Lagerrotationsachse (A_{L}) geneigt und an genau einem Ende durch einen Bord (9) begrenzt ist,
• Montage des inneren und äußeren Lagerringes (2.6) sowie einer Vielzahl auf deren Laufbahnen abrollender Rollenwälzkörper (10) nach einem an sich als Montageverfahren für Rillenkugellager bekannten Exzentermontagerverfahren.

2. Verfahren nach Anspruch 1. **dadurch gekennzeichnet, dass** der erste und zweite Neigungswinkel betragsmäßig gleich sind.

3. Verfahren nach Anspruch 1 oder 2. **dadurch gekennzeichnet, dass** in einem ersten Schritt des Exzentermontagerverfahrens der innere Lagerring (2) mit seiner mit dem Bord (5) ausgebildeten Stirnseite auf eine horizontale Montageebene (16) mit einer konvexen sichelförmigen Hilfsrampe (17) derart aufgelegt wird, dass dieser mit seinem Bord (5) an der Innendurchmesserseite (19) der Hilfsrampe (17) anliegt.

4. Verfahren nach Anspruch 3, **dadurch gekennzeichnet, dass** in einem zweiten Schritt des Exzentermontagerverfahrens der äußere Lagerring (6) mit seiner mit dem Bord (9) ausgebildeten Stirnseite nach oben derart exzentrisch zum inneren Lagerring (2) angeordnet wird, dass einerseits die Hilfsrampe (17) zwischen den Lagerringen (2, 6) angeordnet ist und andererseits um 180° zur Mitte der Hilfsrampe (17) versetzt die Lagerringe (2, 6) aneinander anliegen.

5. Verfahren nach Anspruch 4. **dadurch gekennzeichnet, dass** in einem dritten Schritt des Exzentermontagerverfahrens der entstandene sichelförmige Freiraum zwischen dem äußeren Lagerring (6) und dem inneren Lagerring (2) mit den als Kegelrollen ausgebildeten Rollenwälzkörpern (10) derart befüllt wird, dass deren kleinere Stirnseiten auf der Schrägseite (21) der Hilfsrampe (17) aufliegen

6. Verfahren nach Anspruch 1 oder 2, **dadurch gekennzeichnet, dass** in einem ersten Schritt des Exzentermontagerverfahrens der äußere Lagerring (6) mit seiner mit dem Bord (9) ausgebildeten Stirnseite auf eine horizontale Montageebene (16) mit einer konvexen sichelförmigen Hilfsrampe (18) derart aufgelegt wird dass dieser mit seinem Bord (9) an der Außendurchmesserseite (20) der Hilfsrampe (18) anliegt.

7. Verfahren nach Anspruch 6, **dadurch gekennzeichnet, dass** in einem zweiten Schritt des Exzentermontagerverfahrens der innere Lagerring (2) mit seiner mit dem Bord (5) ausgebildeten Stirnseite nach oben derart exzentrisch zum außeren Lagerring (6) angeordnet wird, dass einerseits die Hilfsrampe (18) zwischen den Lagerringen (2, 6) angeordnet ist und andererseits um 180° zur Mitte der Hilfsrampe (18) versetzt die Lagerringe (2, 6) aneinander anliegen.

8. Verfahren nach Anspruch 7, **dadurch gekennzeichnet, dass** in einem dritten Schritt des Exzentermontagerverfahrens der entstandene sichelförmige Freiraum zwischen dem inneren Lagerring (2) und dem äußeren Lagerring (6) mit den als Kegelrollen ausgebildeten Rollenwälzkörpern (10) derart befüllt wird, dass deren größere Stirnseiten auf der Schrägseite (22) der Hilfsrampe (18) aufliegen.

9. Verfahren nach Anspruch 3 oder 6. **dadurch gekennzeichnet, dass** in einem vierten Schritt des Exzentermontagerverfahrens der äußere Lagerring (3) in Höhe des Berührungspunktes mit dem inneren Lagerring (2) sowie in Höhe eines dem Berührungspunkt um 180° versetzten Punktes an dessen Außenmantelfläche derart eingespannt wird, dass der äußere Lagerring (3) innerhalb seiner Elastizitätsgrenze geringfügig ovalisiert wird.

10. Verfahren nach Anspruch 9. **dadurch gekennzeichnet, dass** in einem fünften Schritt des Exzentermontagerverfahrens der innere Lagerring (2) in eine koaxiale Lage zum äußeren Lagerring (3) verschoben wird und die Rollenwälzkörper (10) in ihren Laufbahnen (4, 8) in den Lagerringen (2, 6) unter Aufhebung der Ovalisierung des äußeren Lagerrings (3) gleichmäßig umfangsverteilt werden.

11. Verfahren nach Anspruch 10. **dadurch gekennzeichnet dass** in einem sechsten Schritt des Exzentermontagerverfahrens der als Kammkäfig ausgebildete Lagerkäfig (11) mit seinen Käfigstegen (13) zwischen die Rollenwälzkörper (10) von der Seite mit deren kleineren Stirnseiten her eingeführt und mit seinen Rastnasen (14) an der Innenfläche (15) des Bordes (5) am inneren Lagerring (2) verrastet wird.

12. Verfahren nach Anspruch 10. **dadurch gekennzeichnet, dass** in einem sechsten Schritt des Exzentermontagerverfahrens der als Kammkäfig ausgebildete Lagerkäfig (11) mit seinen Käfigstegen (13) zwischen die Rollenwälzkörper (10) von der Seite mit deren größeren Stirnseiten her eingeführt und mit seinen Raststegen an der Innenfläche des Bordes (9) am äußeren Lagerrings (6) verrastet wird.

13. Vorrichtung zur Durchführung des Verfahrens nach Anspruch 5. **dadurch gekennzeichnet, dass** die mit ihrer Innendurchmesserseite (19) am inneren Lagerring (2) anliegende Hilfsrampe (17) eine sich zum äußeren Lagerring (3) hin mit dem Neigungswinkel der Laufbahn (4) im inneren Lagerring (2) verjüngende Schrägseite (21) sowie eine maximale Rampenhöhe (h_{R}) aufweist. die der Bordhöhe (h_{BI}) am inneren Lagerring (2) entspricht.

14. Vorrichtung zur Durchführung des Verfahren nach Anspruch 8, **dadurch gekennzeichnet, dass** die mit ihrer Außendurchmesserseite (20) am äußeren Lagerring (6) anliegende Hilfsrampe (18) eine sich zum inneren Lagerring (2) hin mit dem Neigungswinkel der Laufbahn (8) im äußeren Lagerring (6) verjüngende Schrägseite (22) sowie eine maximale Rampenhöhe (h_{R}) aufweist, die der Bordhöhe (h_{BA}) am äußeren Lagerring (6) entspricht.

## Claims

1. Method for producing an angular contact roller bearing with unilaterally delimiting rims (5, 9), having the following method steps:
• generating an outer shell surface (3) on an inner bearing ring (2), which outer shell surface is inclined in a first inclination direction relative to the bearing axis of rotation (A_{L}) in an axial direction,
• generating an inner shell surface (7) on an outer bearing ring (6), which inner shell surface is inclined in a second inclination direction relative to the bearing axis of rotation (A_{L}) in an axial direction, wherein the second inclination direction is oriented oppositely to the first inclination direction,
• conically forming an inner raceway (4) into the outer shell surface (3) of the inner bearing ring (2) such that the inner raceway (4) is inclined relative to the bearing axis of rotation (A_{L}) and is delimited at precisely one end by a rim (5),
• conically forming an outer raceway (8) into the inner shell surface (7) of the outer bearing ring (6), such that the outer raceway (8) is inclined relative to the bearing axis of rotation (A_{L}) and is delimited at precisely one end by a rim (9),
• assembling the inner and outer bearing rings (2, 6) and a multiplicity of roller-type rolling bodies (10), which roll on the raceways of said bearing rings, in accordance with an eccentric assembly method known as an assembly method for deep-groove ball bearings.

2. Method according to Claim 1, **characterized in that** the first and second inclination angles are equal in magnitude.

3. Method according to Claim 1 or 2, **characterized in that**, in a first step of the eccentric assembly method, the inner bearing ring (2) is placed, with its face side formed with the rim (5), onto a horizontal assembly plane (16) with a convex sickle-shaped auxiliary ramp (17) in such a way that said inner bearing ring bears with its rim (5) against the inner diameter side (19) of the auxiliary ramp (17) .

4. Method according to Claim 3, **characterized in that**, in a second step of the eccentric assembly method, the outer bearing ring (6) is arranged, with its face side formed with the rim (9) upward, eccentrically with respect to the inner bearing ring (2) such that, at one side, the auxiliary ramp (17) is arranged between the bearing rings (2, 6) and, at the other side, offset 180° with respect to the center of the auxiliary ramp (17), the bearing rings (2, 6) bear against one another.

5. Method according to Claim 4, **characterized in that**, in a third step of the eccentric assembly method, the sickle-shaped free space formed between the outer bearing ring (6) and the inner bearing ring (2) is filled with the roller-type rolling bodies (10) in the form of tapered rollers such that the relatively small face sides of said roller-type rolling bodies lie on the oblique side (21) of the auxiliary ramp (17).

6. Method according to Claim 1 or 2, **characterized in that**, in a first step of the eccentric assembly method, the outer bearing ring (6) is placed, with its face side formed with the rim (9), onto a horizontal assembly plane (16) with a convex sickle-shaped auxiliary ramp (18) in such a way that said outer bearing ring bears with its rim (9) against the outer diameter side (20) of the auxiliary ramp (18) .

7. Method according to Claim 6, **characterized in that**, in a second step of the eccentric assembly method, the inner bearing ring (2) is arranged, with its face side formed with the rim (5) upward, eccentrically with respect to the outer bearing ring (6) such that, at one side, the auxiliary ramp (18) is arranged between the bearing rings (2, 6) and, at the other side, offset 180° with respect to the center of the auxiliary ramp (18), the bearing rings (2, 6) bear against one another.

8. Method according to Claim 7, **characterized in that**, in a third step of the eccentric assembly method, the sickle-shaped free space formed between the inner bearing ring (2) and the outer bearing ring (6) is filled with the roller-type rolling bodies (10) in the form of tapered rollers such that the relatively large face sides of said roller-type rolling bodies lie on the oblique side (22) of the auxiliary ramp (18).

9. Method according to Claim 3 or 6, **characterized in that**, in a fourth step of the eccentric assembly method, the outer bearing ring (3) is clamped, at the level of the contact point with the inner bearing ring (2) and at the level of a point on the outer shell surface of said outer bearing ring which is offset 180° with respect to the contact point, such that the outer bearing ring (3) is slightly ovalized within its elasticity limit.

10. Method according to Claim 9, **characterized in that**, in a fifth step of the eccentric assembly method, the inner bearing ring (2) is displaced into a coaxial position with respect to the outer bearing ring (3), and the roller-type rolling bodies (10) are uniformly circumferentially distributed in their raceways (4, 8) in the bearing rings (2, 6), with the ovalization of the outer bearing ring (3) being eliminated.

11. Method according to Claim 10, **characterized in that**, in a sixth step of the eccentric assembly method, the bearing cage (11) in the form of a comb-type cage is inserted with its cage webs (13) between the roller-type rolling bodies (10) from the side with the relatively small face sides of said roller-type rolling bodies, and said bearing cage is engaged with its detent lugs (14) with detent action against the inner surface (15) of the rim (5) on the inner bearing ring (2).

12. Method according to Claim 10, **characterized in that**, in a sixth step of the eccentric assembly method, the bearing cage (11) in the form of a comb-type cage is inserted with its cage webs (13) between the roller-type rolling bodies (10) from the side with the relatively large face sides of said roller-type rolling bodies, and said bearing cage is engaged with its detent webs with detent action against the inner surface of the rim (9) on the outer bearing ring (6).

13. Device for carrying out the method according to Claim 5, **characterized in that** the auxiliary ramp (17) which bears with its inner diameter side (19) against the inner bearing ring (2) has an oblique side (21), which tapers toward the outer bearing ring (3) with the angle of inclination of the raceway (4) in the inner bearing ring (2), and a maximum ramp height (h_{R}) which corresponds to the rim height (h_{BI}) on the inner bearing ring (2).

14. Device for carrying out the method according to Claim 8, **characterized in that** the auxiliary ramp (18) which bears with its outer diameter side (20) against the outer bearing ring (6) has an oblique side (22), which tapers toward the inner bearing ring (2) with the angle of inclination of the raceway (8) in the outer bearing ring (6), and a maximum ramp height (h_{R}) which corresponds to the rim height (h_{BA}) on the outer bearing ring (6).

## Revendications

1. Procédé de fabrication d'un roulement à rouleaux obliques avec des bords de limitation d'un côté (5, 9), présentant les étapes de procédé suivantes:
• produire une surface latérale extérieure (3) sur une bague de palier intérieure (2), qui est inclinée en direction axiale dans une première direction d'inclinaison par rapport à l'axe de rotation du palier (A_{L}),
• produire une surface latérale intérieure (7) sur une bague de palier extérieure (6), qui est inclinée en direction axiale dans une deuxième direction d'inclinaison par rapport à l'axe de rotation du palier (A_{L}), dans lequel la deuxième direction d'inclinaison est orientée de façon opposée à la première direction d'inclinaison,
• usiner en forme de cône une piste de roulement intérieure (4) dans la surface latérale extérieure (3) de la bague de palier intérieure (2), de telle manière que la piste de roulement intérieure (4) soit inclinée par rapport à l'axe de rotation du palier (A_{L}) et soit limitée à exactement une extrémité par un bord (5),
• usiner en forme de cône une piste de roulement extérieure (8) dans la surface latérale intérieure (7) de la bague de palier extérieure (6), de telle manière que la piste de roulement extérieure (8) soit inclinée par rapport à l'axe de rotation du palier (AL) et soit limitée à exactement une extrémité par un bord (9),
• monter les bagues de palier intérieure et extérieure (2, 6) ainsi qu'une multiplicité de corps de roulement (10) roulant sur leurs pistes de roulement selon un procédé de montage excentrique connu comme procédé de montage pour des roulements à billes rainurés.

2. Procédé selon la revendication 1, **caractérisé en ce que** le premier et le deuxième angles d'inclinaison sont égaux en valeur.

3. Procédé selon une revendication 1 ou 2, **caractérisé en ce que** dans une première étape du procédé de montage excentrique on pose la bague de palier intérieure (2) avec son côté frontal pourvu du bord (5) sur un plan de montage horizontal (16) avec une rampe auxiliaire (17) en forme de croissant convexe, de telle manière qu'elle s'applique avec son bord (5) sur le côté de diamètre intérieur (19) de la rampe auxiliaire (17).

4. Procédé selon la revendication 3, **caractérisé en ce que** dans une deuxième étape du procédé de montage excentrique on dispose la bague de palier extérieure (6) avec son côté frontal pourvu du bord (9) vers le haut de façon excentrique par rapport à la bague de palier intérieure (2), de telle manière que d'une part la rampe auxiliaire (17) soit disposée entre les bagues de palier (2, 6) et que d'autre part les bagues de palier (2, 6) s'appliquent l'une sur l'autre avec un décalage de 180° par rapport au centre de la rampe auxiliaire (17).

5. Procédé selon la revendication 4, **caractérisé en ce que** dans une troisième étape du procédé de montage excentrique l'espace libre en forme de croissant formé entre la bague de palier extérieure (6) et la bague de palier intérieure (2) est rempli avec les corps de roulement (10) formés par des rouleaux coniques, de telle manière que leurs plus petits côtés frontaux s'appliquent sur le côté oblique (21) de la rampe auxiliaire (17).

6. Procédé selon une revendication 1 ou 2, **caractérisé en ce que** dans une première étape du procédé de montage excentrique on pose la bague de palier extérieure (6) avec son côté frontal pourvu du bord (9) sur un plan de montage horizontal (16) avec une rampe auxiliaire (18) en forme de croissant convexe, de telle manière qu'elle s'applique avec son bord (9) sur le côté de diamètre extérieur (20) de la rampe auxiliaire (18).

7. Procédé selon la revendication 6, **caractérisé en ce que** dans une deuxième étape du procédé de montage excentrique on dispose la bague de palier intérieure (2) avec son côté frontal pourvu du bord (5) vers le haut de façon excentrique par rapport à la bague de palier extérieure (6), de telle manière que d'une part la rampe auxiliaire (18) soit disposée entre les bagues de palier (2, 6) et que d'autre part les bagues de palier (2, 6) s'appliquent l'une sur l'autre avec un décalage de 180° par rapport au centre de la rampe auxiliaire (18).

8. Procédé selon la revendication 7, **caractérisé en ce que** dans une troisième étape du procédé de montage excentrique l'espace libre en forme de croissant formé entre la bague de palier intérieure (2) et la bague de palier extérieure (6) est rempli avec les corps de roulement (10) formés par des rouleaux coniques, de telle manière que leurs plus grands côtés frontaux s'appliquent sur le côté oblique (22) de la rampe auxiliaire (18).

9. Procédé selon une revendication 3 ou 6, **caractérisé en ce que** dans une quatrième étape du procédé de montage excentrique on serre la bague de palier extérieure (3) à hauteur du point de contact avec la bague de palier intérieure (2) ainsi qu'à hauteur d'un point décalé de 180° par rapport au point de contact sur sa surface latérale extérieure, de telle manière que la bague de palier extérieure (3) soit légèrement ovalisée à l'intérieur de sa limite d'élasticité.

10. Procédé selon la revendication 9, **caractérisé en ce que** dans une cinquième étape du procédé de montage excentrique on déplace la bague de palier intérieure (2) dans une position coaxiale à la bague de palier extérieure (3) et les corps de roulement (10) sont répartis uniformément en périphérie dans leurs pistes de roulement (4, 8) dans les bagues de palier (2, 6) en supprimant l'ovalisation de la bague de palier extérieure (3) .

11. Procédé selon la revendication 10, **caractérisé en ce que** dans une sixième étape du procédé de montage excentrique on introduit la cage de palier (11) réalisée en forme de cage à doigts avec ses nervures de cage (13) entre les corps de roulement (10) par le côté ayant les plus petits côtés frontaux et on la verrouille sur la bague de palier intérieure (2) avec ses ergots d'accrochage (14) à la surface intérieure (15) du bord (5) .

12. Procédé selon la revendication 10, **caractérisé en ce que** dans une sixième étape du procédé de montage excentrique on introduit la cage de palier (11) réalisée en forme de cage à doigts avec ses nervures de cage (13) entre les corps de roulement (10) par le côté ayant les plus grands côtés frontaux et on la verrouille sur la bague de palier extérieure (6) avec ses ergots d'encliquetage à la surface intérieure du bord (9).

13. Dispositif pour la mise en oeuvre du procédé selon la revendication 5, **caractérisé en ce que** la rampe auxiliaire (17) s'appliquant avec son côté de diamètre intérieur (19) sur la bague de palier intérieure (2) présente un côté oblique (21) se rétrécissant en direction de la bague de palier extérieure (3) avec l'angle d'inclinaison de la piste de roulement (4) dans la bague de palier intérieure (2) ainsi qu'une hauteur de rampe maximale (h_{R}), qui correspond à la hauteur de bord (h_{BI}) sur la bague de palier intérieure (2).

14. Dispositif pour la mise en oeuvre du procédé selon la revendication 8, **caractérisé en ce que** la rampe auxiliaire (18) s'appliquant avec son côté de diamètre extérieur (20) sur la bague de palier extérieure (6) présente un côté oblique (22) se rétrécissant en direction de la bague de palier intérieure (2) avec l'angle d'inclinaison de la piste de roulement (8) dans la bague de palier extérieure (6) ainsi qu'une hauteur de rampe maximale (h_{R}), qui correspond à la hauteur de bord (h_{BA}) sur la bague de palier extérieure (6).
